# EUROPÄISCHE PATENTANMELDUNG

(11) **EP 2 570 921 A1**
(43) Veröffentlichungstag der Anmeldung: **20.03.2013**
(21) Anmeldenummer: 12170271.6
(22) Anmeldetag: 31.05.2012
(51) Int. Cl.: G06F 9/45

(54) **Verfahren und Vorrichtungen zum Austausch von Daten**

(30) Priorität: 14.06.2011 DE 102011077476
(71) Anmelder: Siemens Aktiengesellschaft, 80333 München (DE)
(72) Erfinder: Heuer, Jörg, 82041 Oberhaching (DE); Käbisch, Sebastian, 80997 München (DE); Peintner, Daniel, 39037 Meransen Muehlbach (IT)

(57) **Zusammenfassung**

Die Erfindung beschreibt ein Verfahren zum Austausch von Daten zwischen einem Sender (1) und einem Empfänger (2). Der Datenaustausch basiert auf einer dem Sender (1) und dem Empfänger (2) bekannten Grammatik (22). In dem erfindungsgemäßen Verfahren erfolgt bei einer Abweichung der Grammatik (22) in dem Sender (1) von der bekannten Grammatik (22) in einer Initialisierungsphase zu Beginn des Datenaustauschs oder zwischen der eigentlichen Laufzeit der Datenübertragung zwischen dem Sender (1) und dem Empfänger (2) ein Angleich der bekannten Grammatik (22) des Empfängers (2) an die abweichende Grammatik (22) des Senders (1).

## Beschreibung

Die Erfindung betrifft ein Verfahren und Vorrichtungen zum Austausch von Daten zwischen einem Sender und einem Empfänger, wobei der Datenaustausch auf einem dem Sender und dem Empfänger bekannten Grammatik basiert.

Im Einsatz von effizienten Kodierverfahren für XML (Extensible Markup Language) wird in vielen Fällen davon ausgegangen, dass sich ein Sender und ein Empfänger vor der eigentlichen Übertragung von Daten auf ein gemeinsames Wissen, z.B. in der Form eines bekannten XML-Schemas, geeinigt haben. Beispielsweise trifft dies bei der Verwendung des sogenannten Schema Informed Mode auf EXI (Efficient XML Interchange) oder MPEG BiM (Binäres MPEG-Format für XML) zu. EXI ist ein Format für die binäre Repräsentation von XML Information Sets. Im Vergleich zu textbasierten XML-Dokumenten können Dokumente im EXI-Format schneller verarbeitet werden und benötigen weniger Bandbreite beim Transfer über eine Kommunikationsverbindung.

Das gemeinsame Wissen, das als "Shared Knowledge" bezeichnet wird, wird für die effiziente Repräsentation von XML-Daten verwendet. Dabei werden in dem gemeinsamen Wissen enthaltene Informationen nicht ein weiteres Mal im Datenstrom verwendet, sondern durch Verweis auf in dem gemeinsamen Wissen enthaltenen Informationen ersetzt, wodurch die eigentliche Datenmenge für die Übertragung klein gehalten werden kann. Die Einigung auf gemeinsames Wissen vor der eigentlichen Übertragung ist in vielen Anwendungsgebieten schwer oder nicht möglich. Dies hat dann zur Folge, dass bei einem Datenaustausch auf kein gemeinsames Wissen zur Reduktion des Datenstromes zurückgegriffen werden kann. Im schlimmsten Fall ist sogar gar kein Datenaustausch möglich.

Der Einsatz von effizienten Kodierverfahren für XML ist beispielsweise bei "Embedded Systems" von Bedeutung. Solche Systeme kommen beispielsweise im Umfeld von Elektrofahrzeugen zum Einsatz, bei denen Informationen zwischen einem Elektrofahrzeug und einer Ladestation beispielsweise mittels XML ausgetauscht werden. Eine Anforderung in diesem Umfeld besteht unter anderem darin, dass sowohl eine Vorwärts- als auch eine Rückwärtskompatibilität zwischen älteren und den aktuellsten Versionen der XML-Schemas beider Komponenten bestehen muss. Die Vereinbarung eines gemeinsamen Wissens ist hierbei mit einigem Aufwand verbunden.

Es ist Aufgabe der vorliegenden Erfindung, ein Verfahren und Vorrichtungen zum effizienteren Austausch von Daten zwischen einem Sender und einem Empfänger anzugeben, welche ein Kodierverfahren für XML nutzen.

Diese Aufgabe wird gelöst durch ein Verfahren gemäß den Merkmalen des Patentanspruches 1 sowie Vorrichtungen gemäß den Merkmalen der Patentansprüche 15 und 16. Vorteilhafte Ausgestaltungen finden sich in den abhängigen Patentansprüchen.

Bei dem erfindungsgemäßen Verfahren zum Austausch von Daten zwischen einem Sender und einem Empfänger, wobei der Datenaustausch auf einem dem Sender und dem Empfänger bekannten Grammatik basiert, welches im Sender und im Empfänger vorliegt und zum Beispiel aus einem XML Schema, DTD oder RNG abgeleitet wurde, erfolgt bei einer Abweichung der Grammatik in dem Sender von der bekannten Grammatik in einer Initialisierungsphase zu Beginn des Datenaustauschs oder zwischen der eigentlichen Laufzeit der Datenübertragung zwischen dem Sender und dem Empfänger ein Angleich der bekannten Grammatik des Empfängers an die abweichende Grammatik des Senders.

Bei dem erfindungsgemäßen Verfahren wird vor der eigentlichen Übertragung der Nutzdaten ein gemeinsames Wissen (shared coding knowledge) in Gestalt angeglichener Grammatiken im Sender und im Empfänger hergestellt, das in Folge für alle weiteren Nachrichten als Basis bzw. gemeinsames Wissen angenommen werden kann. Vor dem Angleich besteht das gemeinsame Wissen in der bekannten Grammatik, nach dem Angleich in der bekannten und der abweichenden Grammatik. Hiermit ist es möglich, auch wenn vorher keine Vereinbarungen getroffen wurden oder getroffen werden konnten, Daten sehr kompakt und effizient zwischen Sender und Empfänger zu übertragen.

Eine Grammatik stellt in einer dem Fachmann bekannten Weise eine Kodier- und Dekodieranweisung für ein XML-Dokument, eine zu XML äquivalente Datenstruktur oder eine Speicherrepräsentation eines XML Dokuments zum Beispiel als Document Object Model, DOM einer Kodiereinrichtung dar. Eine Dekodiereinrichtung nutzt die Grammatik als Anweisung, um aus einem empfangenen Datenstrom ein XML-Dokument, eine zu XML äquivalente Datenstruktur oder eine Speicherrepräsentation eines XML Dokuments zu erstellen.

Der Angleich der bekannten Grammatik an die abweichende Grammatik erfolgt zweckmäßigerweise ausschließlich in der Initialisierungsphase. Unterschiede in der Grammatik des Senders und des Empfängers werden während der Laufzeit demgegenüber nicht mehr angeglichen. Unter dem Begriff "während der Laufzeit" ist dabei die eigentliche Übertragung von Nutzdaten zwischen dem Sender und dem Empfänger zu verstehen.

In einer weiteren zweckmäßigen Ausgestaltung werden in der Initialisierungsphase zumindest die Unterschiede zwischen der bekannten und der abweichenden Grammatik von dem Sender an den Empfänger übertragen. Ebenso ist es möglich, die vollständige Grammatik des Senders an den Empfänger zu übertragen, so dass der Empfänger auf Basis eines Vergleichs zwischen der empfangenen abweichenden Grammatik des Senders und der eigenen Grammatik die Unterschiede extrahieren und zu einer Dekodier- bzw. Kodieranweisung verarbeiten kann.

In einer weiteren zweckmäßigen Ausgestaltung erfolgt im Empfänger ein Angleichen der bekannten Grammatik an die abweichende Grammatikdurch Lernen der in der Initialisierungsphase übertragenen Nutzdaten durch den Empfänger.

In einer weiteren zweckmäßigen Ausgestaltung wird vor oder am Anfang der Initialisierung die bekannte Grammatik durch Übermittlung eines Kennzeichners identifiziert. Ein Beispiel eines solchen Kennzeichners kann ein Namespace einer XML Schema Definition sein.

Die Unterscheidung zwischen Initialisierungsphase und "während der Laufzeit" ist insbesondere im Kontext von eingebetteten Systemen von Bedeutung, da Lernen in der Regel unvorhersehbar bezüglich der Nutzung des Speichers, des Zeitverhaltens und der Rechenleistung des eingebetteten Systems ist. Bei eingebetteten Systemen führt Lernen zur Laufzeit unter Umständen zu einer Verletzung der Grenzen von Speicher, Zeitverhalten und Rechenleistung, so dass im ungünstigsten Fall ein Systemversagen die Folge sein kann. Bei eingebetteten Systemen ist ein Lernen während der Laufzeit daher zu vermeiden oder auf geeignete Zeiten in der Laufzeit zu begrenzen, in denen die oben genannten Einschränkungen nicht von Bedeutung sind. Dies vermeidet das vorgeschlagene Verfahren dadurch, dass das Lernen in der Initialisierungsphase, d.h. einer dedizierten Phase vor oder zwischen der eigentlichen Laufzeit der Datenübertragung, erfolgt. In der Initialisierungsphase ist es insbesondere dem das Lernen durchführenden Empfänger möglich zu entscheiden, ob die in den Lerninformationen benötigten Hardwareressourcen auf Empfängerseite ausreichend vorhanden sind. So kann gegebenenfalls ein sicherer Abbruch des Lernens und damit des Angleichens der Grammatikerfolgen. Aus dieser Beschreibung ergibt sich ferner, dass das Lernen der Unterschiede der Grammatik von Sender und Empfänger auf Seiten des Empfängers, welche den Dekoder für die von dem Sender übertragenen Daten umfasst, erfolgt.

Die Einigung auf ein gemeinsames Wissen vor der eigentlichen Übertragung von Nutzdaten kann auf unterschiedliche Weise erfolgen.

In einer ersten Variante erfolgt eine Einigung auf gemeinsames Wissen basierend auf der Übertragung zumindest einer, insbesondere der Laufzeit vorausgehenden, Nachricht in der Initialisierungsphase. Hierbei umfasst die Initialisierungsphase zumindest die erste von dem Sender an den Empfänger übertragene Nachricht, welche es dem Empfänger ermöglicht, die zunächst noch unterschiedlichen Grammatiken im Sender und Empfänger aneinander anzugleichen. Insbesondere wird oder werden die in der Initialisierungsphase übertragene oder übertragenen Nachrichten von einem Dekoder des Empfängers ausgewertet. Demgegenüber wird oder werden die in der Initialisierungsphase übertragene oder übertragenen Nachrichten von einer Applikation des Empfängers nach der Dekodierung verworfen. Dies bedeutet, die in der Initialisierungsphase übertragene oder übertragenen Nachrichten entsprechen den Nutzdaten und werden nach der Dekodierung nicht in üblicher Weise weiter von einer Applikation verarbeitet, da die in der oder den Nachrichten der Initialisierungsphase enthaltenen Informationen nur für das anlernen der Grammatik geeignet ist und nicht sinnvoll von der Applikation verarbeitbar sind.

Beispielsweise kann ein die Abweichung umfassendes XML-Dokument von dem Sender an den Empfänger übertragen werden. Ebenso ist es möglich, dass zumindest veränderte Konstrukte der abweichenden Grammatik an den Empfänger übertragen werden. In der ersten Nachricht, und optional weiteren Nachrichten der Initialisierungsphase, werden somit alle die Datenstruktur und die Datentypen betreffenden Änderungen an den Empfänger zum Beispiel als möglichst Platzsparende Beispielinstanzen übertragen. Dies umfasst nicht nur hinzugefügte Änderungen an der Datenstruktur und den Datentypen, sondern gegebenenfalls auch aus dem XML-Dokument weggenommene Datenstrukturen und -typen. Zum Beispiel bei XML-Schema werden alle Konstrukte (englisch: particle) eines XML-Schemas, welche angeglichen werden müssen, an den Empfänger übertragen.

Die Änderungen werden gemäß einem vorgegebenen Codec im Empfänger abgebildet. Beispielsweise können Elementdaten einem Kennzeichner zugeordnet werden, welcher dann in einer Tabelle hinterlegt werden kann (wie dies beispielsweise bei EXI mit String-Tabellen realisiert ist). Während der Laufzeit des Datenaustauschs zwischen Sender und Empfänger braucht dann der Elementname nicht mehr übertragen zu werden. Es ist ausreichend, lediglich auf den Kennzeichner zu verweisen. Zusätzlich kann darüber hinaus den einzelnen Elementen eine Typ-Eigenschaft zugeordnet werden, welche ebenfalls in der String-Tabelle hinterlegt wird. In diesem Fall kann eine Konversion eines übertragenen Strings in einen numerischen Wert entfallen, da die entsprechende Information über die Art der Verarbeitung der String-Tabelle entnehmbar ist. Hierdurch lässt sich die Effizienz des Übertragungsverfahrens verbessern.

Alternativ kann in dem gemeinsamen Wissen die Information erfasst werden, an welchen Stellen eine Abweichung auftritt.

Die erste Variante weist den Vorteil auf, dass existierende Dekoder in dem Empfänger genutzt werden können, um einen Angleich der Grammatik im Sender und im Empfänger vorzunehmen.

Bei der zweiten Variante wird direkt die abweichende Grammatik in der Initialisierungsphase an den Empfänger übertragen. Bei dieser Variante wird die für die Kodierung bzw. Dekodierung zu nutzende Grammatik dem Dekoder vor der Laufzeit zur Verfügung gestellt. Beispielsweise kann die erste Nachricht, die die Grammatik enthält, gekennzeichnet sein, so dass der Dekoder des Empfängers erkennt, dass darin die für die weitere Dekodierung erforderliche Grammatik enthalten ist. Die Kennzeichnung kann weiterhin zur Initialisierung dienen, dass diese einer der Verarbeitung der Grammatik zugeordneten Schnittstelle einer Laufzeitumgebung des Dekoders zugeführt wird. Die Signalisierung kann beispielsweise auf Transportebene, z.B. Schicht 5 oder 6, erfolgen. Die Grammatik wird bei dieser zweiten Variante z.B. einer Grammatik-Schnittstelle der Laufzeitumgebung des Dekoders des Empfängers zur Verarbeitung der aus der Grammatik erzeugten Dekodieranweisung zugeführt.

Die Erfindung schafft weiter eine Kodiereinrichtung eines Senders zum Austausch von Daten zwischen dem Sender und einem Empfänger, wobei der Datenaustausch auf einer dem Sender und dem Empfänger bekannten Grammatik basiert, welche dazu ausgebildet ist, bei einer Abweichung der Grammatik in dem Sender von der bekannten Grammatik in einer Initialisierungsphase zu Beginn des Datenaustauschs zwischen dem Sender und dem Empfänger einen Angleich der bekannten Grammatik des Empfängers an die abweichende Grammatik des Senders vorzunehmen.

Der Sender kann z.B. sein ganzes Wissen vorab, z.B. als EXI Grammatikform oder als Tabellenform, an den Empfänger übertragen. Hier ist es nicht notwendig, zunächst zu bestimmen, wo die Unterschiede in den Grammatiken liegen. Alternativ kann ein Angleich der Grammatiken durch den Austausch von Identifiern erfolgen.

Weiter schafft die Erfindung eine Dekodiereinrichtung eines Empfängers zum Austausch von Daten zwischen einem Sender und dem Empfänger, wobei der Datenaustausch auf einer dem Sender und dem Empfänger bekannten Grammatikbasiert, welche dazu ausgebildet ist, bei einer Abweichung der Grammatik in dem Sender von der bekannten Grammatik in einer Initialisierungsphase zu Beginn des Datenaustauschs zwischen dem Sender und dem Empfänger einen Angleich der bekannten Grammatik des Empfängers an die abweichende Grammatik des Senders vorzunehmen.

Die Kodiereinrichtung und die Dekodiereinrichtung können darüber hinaus weitere Mittel zur Durchführung des oben beschriebenen Verfahrens umfassen.

Die oben beschriebenen Ausführungsformen weisen jeweils folgende Vorteile auf:

Es ist eine sehr flexible Einigung auf ein gemeinsames Wissen ohne jegliches Übereinkommen vor der eigentlichen Übertragung möglich. Das Vorgehen ermöglicht die Erzielung sehr hoher Kompressionsraten, identisch zum sog. Pre-Agreed Shared Knowledge. Es besteht keine Versionierungproblematik, wenn sich das XML-Schema oder die davon abgeleitete Grammatik, d.h. das vereinbarte gemeinsame Wissen, ändert. In diesem Fall wird das oben beschriebene Vorgehen bei jeder Veränderung erneut in der Initialisierungsphase durchgeführt. Schließlich ist das Vorgehen ein transparentes Verfahren für die Applikationen, die heute schon Pre-Agreement nutzen. Es ist keine Anpassung von EXI-Bibliotheken notwendig, um eine XML-SchemaVersionierung zu erreichen.

Die Erfindung wird nachfolgend näher anhand eines Ausführungsbeispiels in der Zeichnung erläutert. Es zeigen:
- Fig. 1: eine Beispielgrammatik, um EXI-Codes zu erstellen,
- Fig. 2: ein bekanntes Ablaufschema der Kodierung von Daten auf Senderseite,
- Fig. 3: ein Ablaufschema der Kodierung von Daten auf Senderseite, bei dem das erfindungsgemäße Vorgehen illustriert ist, und
- Fig. 4: einen in erfindungsgemäßer Weise eingerichteten Sender und Empfänger zum Austausch von Daten.

Bei dem erfindungsgemäßen Verfahren zum Austausch von Daten zwischen einem Sender 1 und einem Empfänger 2 über eine Kommunikationsverbindung 3 erfolgt ein Datenaustausch basierend auf einer dem Sender 1 und dem Empfänger 2 bekannten Grammatik. Diese Grammatik kann z.B. aus einem XML-Schema, einem DTD (Document Type Definition) oder einer RNG (RELAX NG) Definition abgeleitet sein.

Es sind Anwendungen der Nutzung eines XML-Schema-basierten Datenaustausches möglich, bei dem in dem Sender 1 eine Abweichung von einem ehemals vereinbarten, bekannten XML-Schema möglich ist. Dies ist beispielsweise dann der Fall, wenn in dem Empfänger 2 das XML-Schema, das für die Dekodierung der ausgetauschten Daten verwendet wird, nicht aktualisierbar ist. Das nachfolgend beschriebene Vorgehen schafft eine Möglichkeit, wie bei unterschiedlichen XML-Schemata im Sender 1 und Empfänger 2 dennoch eine hohe Effizienz beim XMLbasierten Datenaustausch erzielt werden kann.

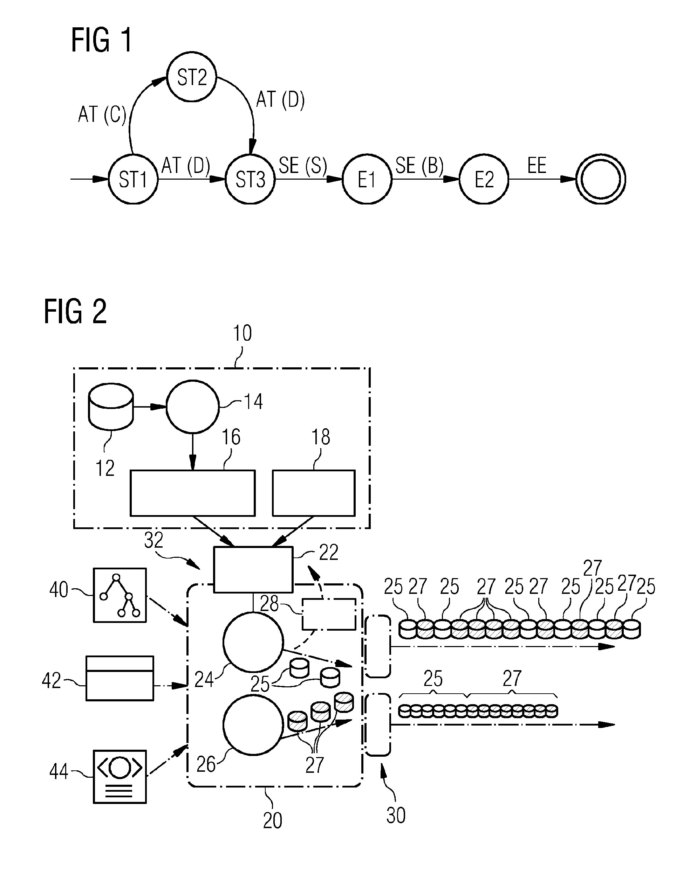

Das nachfolgend beschriebene Verfahren nutzt EXI (Efficient XML Interchange) für die binäre Repräsentation von XML Information Sets. Die zum nachfolgend dargestellten XML-Schema dazugehörige EXI-Grammatik ist schematisch in Fig. 1 dargestellt.

```
 <xs:complexType name="Note">
     <xs:sequence>
          <xs:element name="S" type="xs:string"/>
          <xs:element name="B" type="xs:string"/>
     </xs:sequence>
     <xs:attribute name="D" type="xs:date" use="required"/>
 <xs:attribute name="C" type="xs:string" use="optional"/>
 </xs:complexType>
```

ST1, ST2, ST3, E1 und E2 bezeichnen Zustände der Ablauffolge des EXI-Codes. ST1 repräsentiert ein Starttag 1, ST2 ein Starttag2, ST3 ein Starttag 3, E1 ein Element 1 und E2 ein Element 2. AT(C), AT(D), SE(S), SE(B) und EE bezeichnen Übergänge zwischen den Zuständen. AT(C) steht für AT(Category), AT(D) für AT (Date), SE(S) für SE(Subject) und SE(B) für SE(Body). AT repräsentiert ein Attribut, SE ein Startelement. Fig. 1 zeigt somit einen Dekodierungsablauf, der eine Strukturinformation in einen maschinenlesbaren Dekodierungsablauf abbildet.

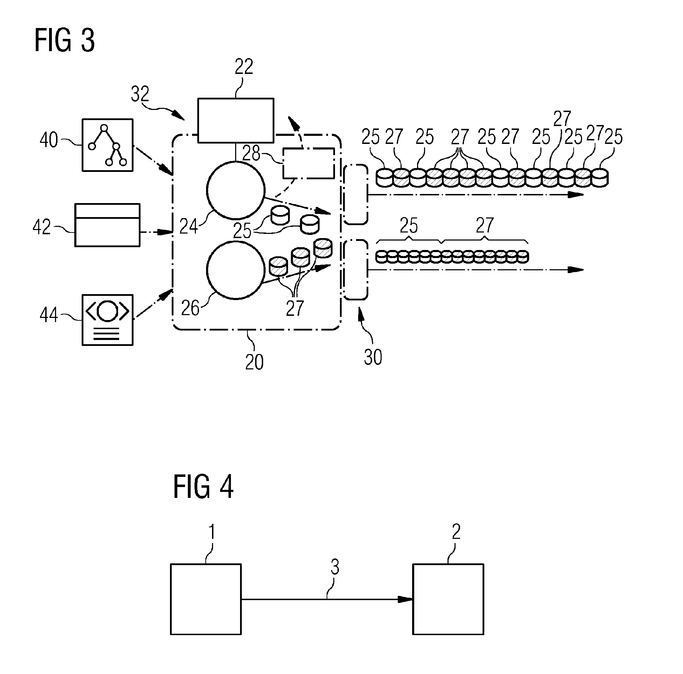

Die Figuren 2 und 3 zeigen jeweils ein Ablaufschema zur Kodierung von Daten auf Seiten des Senders 1, einmal in bekannter, herkömmlicher Weise (Fig. 2) und einmal in erfindungsgemäßer Weise (Fig. 3).

Mit dem Bezugszeichen 10 ist eine im herkömmlichen Ablaufschema gemäß Fig. 2 vorgesehene Konfigurationszeitumgebung gekennzeichnet. In dieser wird ein gegebenes XML-Schema 12 durch einen Schemacompiler 14 in eine Grammatik, die durch das Schema festgelegt ist (Bezugszeichen 16) gewandelt. Das Bezugszeichen 18 bezeichnet eine vordefinierte Grammatik (Built-in Grammar). Aus den Grammatiken 16, 18 wird eine Grammatik 22 einer Laufzeitumgebung 20 erzeugt, welche für die Kodierung auszutauschender Daten verwendet wird. Die erzeugte Grammatik 22 wird über eine nicht standardisierte Schnittstelle (z.B. EXI-Grammatik-Schnittstelle) der Laufzeitumgebung 20 zugeführt. Aus der Grammatik 22 können mittels Struktur-Kodierung 24 und einer Einrichtung 26 zur Inhaltskodierung der Laufzeitumgebung 20 zugeführte Eingangsdaten zu einem Binärstrom prozessiert werden.

Der Laufzeitumgebung können die Eingangsdaten in Datei- oder Textform zugeführt werden. Beispielsweise repräsentiert das Bezugszeichen 40 eine Speicherrepräsentation eines XML, welches auch als Document Object Model (DOM) bezeichnet wird. Das Bezugszeichen 42 repräsentiert eine Datenstruktur, welche äquivalent zu XML ist. Ein XML-Dokument ist mit dem Bezugszeichen 44 gekennzeichnet. Die Eingangsdaten 40, 42, 44 können in einer der beschriebenen Arten vorliegen und der Laufzeitumgebung 20 zugeführt werden. Die Einrichtungen 24 und 26 erzeugen hieraus den Binärstrom, welcher mit dem Bezugszeichen 25 und 27 gekennzeichnet ist. Das Bezugszeichen 25 repräsentiert hierbei kodierte Strukturinformationen, das Bezugszeichen 27 kodierte Inhaltsinformationen. Diese können über eine Schnittstelle 30 in einer entsprechend der Kodierung anfallenden Reihenfolge (oberer Binärstrom) oder in einer neu geordneten (rearranged) und komprimierten (compressed) "Reihenfolge" (unterer Binärstrom) an den Empfänger 2 zur Dekodierung übertragen werden. Die Schnittstelle 30 wird auch als EXI-Schnittstelle bezeichnet. Diese ist standardisiert.

Das in Fig. 2 gezeigte Ablaufschema ist bei bekannten Kommunikationssystemen sowohl auf Seiten des Senders als auch auf Seiten des Empfängers vorhanden. Auf Seiten des Empfängers bildet dann der Binärstrom die Eingangsdaten, welche über die EXI-Schnittstellen den Einrichtungen zur Struktur- und Inhaltskodierung zur Erzeugung der Struktur und des Inhalts zugeführt werden. Das XML-Dokument, die Speicherrepräsentation oder die zu XML äquivalente Datenstruktur stellen dann die Ausgangsdaten des Empfängers dar.

Bei dem erfindungsgemäßen Vorgehen können die in der Konfigurationszeitumgebung 10 enthaltenen Komponenten auf Seiten des Empfängers 2 entfallen. Ermöglicht wird dies in einer Variante dadurch, dass die für die Funktion des Senders und Empfängers erforderliche Grammatik 22 durch den Sender erzeugt und dann in einer Initialisierungsphase vor der eigentlichen Laufzeit des Datenaustausches an den Empfänger übertragen wird. Sämtliche, in der Grammatik 22 enthaltenen Informationen können in einer ersten Nachricht, welche von dem Sender 1 an den Empfänger 2 übertragen wird, enthalten sein.

Diese Nachricht ist vorzugsweise gekennzeichnet, so dass für den Empfänger 2 erkennbar ist, dass diese zur Initialisierung des Dekoders verwendet wird. Hierdurch wird diese nicht der EXI-Schnittstelle 30 der Laufzeitumgebung, sondern der nichtstandardisierten Schnittstelle 32 zugeführt. Eine Signalisierung, d.h. Kennzeichnung, dass in der ersten Nachricht eine Grammatik enthalten ist, kann beispielsweise auf Transportebene, z.B. Schicht 5, erfolgen. Hat der Empfänger 2 die Grammatik 22 empfangen, so verarbeitet er diese in gewohnter Weise. Insbesondere werden die für die Strukturdekodierung erforderlichen Informationen angepasst, sofern erforderlich. Gleiches gilt ebenfalls für das Kodieren des Inhalts mittels der Einrichtung 26.

Wird in einer alternativen Variante das gemeinsame Wissen über eine oder mehrere vorausgehenden Nachrichten in einer Initialisierungsphase zu Beginn des Datenaustausches zwischen Sender 1 und Empfänger 2 hergestellt, so erfolgt dieser Datenaustausch über die EXI-Schnittstelle 30. In der oder den Nachrichten der Initialisierungsphase werden von dem Sender 1 an den Empfänger sämtliche in dem XML-Dokument des Empfängers zu vorzunehmenden Änderungen bezüglich der Datenstruktur und der Datentypen mitgeteilt. Die Nachricht oder Nachrichten in der Initialisierungsphase umfassen allgemein alle oder alle zu ändernden Konstrukte (Particles) eines XML-Schemas. Sobald diese von dem Empfänger über die Schnittstelle 30 empfangen wurden, werden diese über eine Ad-hoc-Grammatikeinrichtung 28 im Empfänger abgebildet, so dass die Grammatik 22 des Empfängers an die Grammatik 22 des Senders 1 angeglichen wird. Die weiteren Nachrichten nach der Initialisierungsphase nutzen dann das gemeinsame Wissen, um die zu übertragende Datenmenge kleinzuhalten.

Bei den in der oder den Nachrichten der Initialisierungsphase übertragenen Nachrichten kann es sich beispielsweise um Strings handeln, welche bei EXI genutzt werden, String-Tabellen vorzufüllen. Wiederauftretende Strings können hierbei mit Kennzeichnern versehen werden, so dass anstelle eines textuellen Strings in den Nachrichten zur Laufzeit lediglich der Kennzeichner kodiert werden braucht. Zur Erhöhung der Effizienz kann darüber hinaus ein Datensatz mit einer Typ-Eigenschaft versehen werden. Hierdurch können zur Laufzeit verwendete Daten auch auf einen Typ referenzieren, so dass beispielsweise auf Seiten des Empfängers ein Typumwandlungsverfahren nicht durchgeführt zu werden braucht.

Insgesamt ermöglicht dieses Vorgehen eine flexible Einigung auf gemeinsames Wissen ohne jegliches Übereinkommen vor der eigentlichen Übertragung. Es können sehr hohe Kompressionsraten erzielt werden. Darüber hinaus gibt es keine Versionierungsproblematik, wenn sich das XML-Schema auf Seiten des Senders ändert. Ein weiterer Vorteil besteht darin, dass das Verfahren transparent für Applikationen ist, welche heute bereits die Methodik des "Pre-Agreements" nutzen. Hier sind keine Anpassungen von EXI-Bibliotheken notwendig, um eine XML-Schemaversionierung zu erreichen.

## Patentansprüche

1. Verfahren zum Austausch von Daten zwischen einem Sender (1) und einem Empfänger (2), wobei der Datenaustausch auf einer dem Sender (1) und dem Empfänger (2) bekannten Grammatik basiert, bei dem
bei einer Abweichung der Grammatik in dem Sender (1) von der bekannten Grammatik in einer Initialisierungsphase zu Beginn des Datenaustauschs oder zwischen der eigentlichen Laufzeit der Datenübertragung zwischen dem Sender (1) und dem Empfänger (2) ein Angleich der bekannten Grammatik des Empfängers (2) an die abweichende Grammatik des Senders (1) erfolgt.

2. Verfahren nach Anspruch 1, bei dem der Angleich der bekannten Grammatik an die abweichende Grammatik ausschließlich in der Initialisierungsphase erfolgt.

3. Verfahren nach Anspruch 1 oder 2, bei dem Unterschiede in der Grammatik des Senders (1) und des Empfängers (2) während der Laufzeit nicht angeglichen werden.

4. Verfahren nach einem der vorhergehenden Ansprüche, bei dem in der Initialisierungsphase zumindest die Unterschiede zwischen der bekannten und der abweichenden Grammatik von dem Sender (1) an den Empfänger (2) übertragen werden.

5. Verfahren nach einem der vorhergehenden Ansprüche, bei dem im Empfänger (2) ein Angleichen der bekannten Grammatik an die abweichende Grammatik durch Lernen der in der Initialisierungsphase übertragenen Nutzdaten durch den Empfänger (2) erfolgt.

6. Verfahren nach einem der vorhergehenden Ansprüche, bei dem vor oder am Anfang der Initialisierung die bekannte Grammatik durch Übermittlung eines Kennzeichners identifiziert wird.

7. Verfahren nach einem der Ansprüche 1 bis 6, bei dem die Initialisierungsphase zumindest die erste von dem Sender (1) an den Empfänger (2) übertragene Nachricht umfasst.

8. Verfahren nach Anspruch 7, bei dem die in der Initialisierungsphase übertragene oder übertragenen Nachrichten von einem Dekoder des Empfängers (2) ausgewertet wird oder werden.

9. Verfahren nach Anspruch 7 oder 8, bei dem die in der Initialisierungsphase übertragene oder übertragenen Nachrichten von einer Applikation des Empfängers (2) zwecks Dekodierung verworfen wird oder werden.

10. Verfahren nach einem der Ansprüche 7 bis 9, bei dem ein die Abweichung umfassendes XML-Dokument an den Empfänger (2) übertragen wird.

11. Verfahren nach einem der Ansprüche 7 bis 10, bei dem zumindest veränderte Konstrukte eines abweichenden XML-Schemas an den Empfänger (2) übertragen werden.

12. Verfahren nach einem der Ansprüche 1 bis 6, bei dem die abweichende Grammatik (22) in der Initialisierungsphase an den Empfänger (2) übertragen wird.

13. Verfahren nach Anspruch 12, bei dem die Grammatik (22) einer Grammatik-Schnittstelle einer Laufzeitumgebung zur Verarbeitung einer aus der Grammatik (22) erzeugten Dekodieranweisung zugeführt wird.

14. Verfahren nach einem der Ansprüche 1 bis 12, bei der die Grammatik (22) von einer XML Schema Definition, Relax NG Definition oder einer Document Type Definition abgeleitet wird.

15. Kodiereinrichtung eines Senders (1) zum Austausch von Daten zwischen dem Sender (1) und einem Empfänger (2), wobei der Datenaustausch auf einer dem Sender (1) und dem Empfänger (2) bekannten Grammatik basiert, welche dazu ausgebildet ist, bei einer Abweichung des der Grammatik in dem Sender (1) von der bekannten Grammatik in einer Initialisierungsphase zu Beginn des Datenaustauschs zwischen dem Sender (1) und dem Empfänger (2) einen Angleich der bekannten Grammatik des Empfängers (2) an die abweichende Grammatik des Senders (1) vorzunehmen.

16. Dekodiereinrichtung eines Empfängers (2) zum Austausch von Daten zwischen einem Sender (1) und dem Empfänger (2), wobei der Datenaustausch auf einer dem Sender (1) und dem Empfänger (2) bekannten basiertwelche dazu ausgebildet ist, bei einer Abweichung der Grammatik in dem Sender (1) von der bekannten Grammatik in einer Initialisierungsphase zu Beginn des Datenaustauschs zwischen dem Sender (1) und dem Empfänger (2) einen Angleich der bekannten Grammatik des Empfängers (2) an die abweichende Grammatik des Senders (1) vorzunehmen.
